# EUROPEAN PATENT SPECIFICATION

(11) **EP 3 372 381 B1**
(45) Date of publication and mention of the grant of the patent: **08.03.2023**
(21) Application number: 18151676.6
(22) Date of filing: 15.01.2018
(51) Int. Cl.: B29C 53/08

(54) **MOULD FOR FURNACE/STEAM BENDING OF PLASTIC OR RUBBER TUBES AND A METHOD OF PRODUCING IT**
FORM FÜR OFEN-/DAMPFBIEGEN VON KUNSTSTOFF- ODER GUMMIROHREN UND VERFAHREN ZUR HERSTELLUNG DAVON
MOULE POUR LE CINTRAGE AU FOUR/À LA VAPEUR DE TUBES EN MATIÈRE PLASTIQUE OU EN CAOUTCHOUC ET SON PROCÉDÉ DE FABRICATION

(30) Priority: 10.03.2017 CZ 20170138
(43) Date of publication of application: 12.09.2018
(73) Proprietor: MSV SYSTEMS CZ s.r.o., 460 01 Liberec XI - Ruzodol I (CZ)
(72) Inventor: Barvinek, Marek, 463 31 Bily Kostel nad Nisou - Chrastava (CZ)
(74) Representative: Musil, Dobroslav

(56) References cited:
- DE-A1-102011 011 577
- DE-U1-202006 001 010
- DE-U1-202013 100 888
- US-A1- 2003 042 655

## Description

### Technical field

The invention relates to a mould for bending of plastic or rubber tubes in furnace or by steam, which comprises a shaping labyrinth comprising at least two adjacent parts connected to each other.

The invention also relates to a method of producing a mould for furnace/steam bending of plastic or rubber tubes, in which a shaping labyrinth is provided, whose shape is subsequently adjusted according to a control master jig of the tube to be shaped.

### Background art

A mould for bending of plastic or rubber tubes in furnace or by steam is a part of a device for furnace/steam bending of plastic and/or rubber tubes.

The mould comprises a shaping labyrinth, hereinafter a labyrinth, made of a resistant material, into which before shaping by heating, a tube to be shaped of elastic thermosensitive material is inserted. After undergoing the furnace/steam bending process and after cooling, the tube being shaped retains the shape of the mould into which it was inserted before entering the process. In the case of steam bending, when the material of the tube to be bent is heated from the inside of the tube by the passage of hot vapour, the mould comprises a hollow steam supply head on its front part and at its rear end it comprises a hollow steam discharge head. Both the supply head and the discharge head are connected to a steam source.

The labyrinth itself is formed by a spatially shaped tube with a longitudinal cavity which is along its length provided with a through slot for inserting the tube being shaped (bent) along its entire length into the labyrinth. Thus, the plastic tube being shaped is first inserted along its entire length through the longitudinal slot of the labyrinth into the shaped cavity of the labyrinth, which is made possible by the elastic deformation of the material of the tube being shaped. It is evident that tubes bent in this manner are made of a special elastic material having the necessary mechanical properties before the process of shaping, i.e. before heating, as well as after shaping, i.e. after heating and cooling. In the case of hot steam shaping (bending), the tube being shaped introduced into the labyrinth is inserted by one of its ends into the cavity of the supply steam head and by the opposite end it is inserted into the cavity of the steam discharge head. As a result, the steam circuit of the tube bending device is closed and the bent tube is secured in the labyrinth both in the desired position and in the desired shape, which is determined by the shape of the bending mould - the labyrinth. Subsequently, hot steam is fed into the inner space of the tube being shaped by means of the steam supply head, the temperature of the hot steam typically ranging from 110 ° C to 140 ° C. As a result of heating the material of the tube being shaped with the steam, the material of the tube being shaped is brought into a plastic state, in which, due to the stresses induced by the placing of the tube being shaped in the labyrinth, the originally straight tube changes, whereby the tube is only elastically deformed by being inserted into the labyrinth, taking on the shape corresponding to the spatial shape of the labyrinth, i. e. the desired resultant and permanent shape of the bent tube. After this plastification of the tube material, the steam is switched off and cooling of the tube being shaped is carried out, which results in fixing the shape of the tube being shaped in this state. At the same time, the steam pressure in the inner space of the tube being shaped ensures that the circular cross section of the tube being shaped is maintained during its plastification.

In the case of furnace bending, at first a resilient body, for example a spring, is inserted into the plastic tube to be bent, the flexible body ensuring the circular cross-section of the plastic tube even after plastification of the tube material during heating and cooling. After inserting the resilient body, the tube being shaped is introduced into the labyrinth (bending mould), whereby one end of the tube is inserted into the cavity of a stop head at one end of the labyrinth. The subsequent process consists in heating the tube being shaped in the furnace to a plastic state, the heating temperature being in the range 120 ° C to 220 ° C. As a result of this plastification of the material of the tube being shaped, due to the stresses induced by the placing of the shaped tube in the labyrinth, the originally straight elastic tube is deformed, taking on the shape of the labyrinth, whereby during the subsequent cooling, the shape of the tube being shaped thus formed is fixed. Once the shape of the tube being shaped has been fixed, the inner resilient body is removed.

In this manner, tubes of different lengths, even of relatively large lengths are shaped, and so for such shaping it is necessary to provide a labyrinth of a required length, depending on the length of the tube being shaped. The disadvantage of the background art is the considerable complexity and difficulty of creating the shaping moulds (labyrinths) - in the required shape, length and number, because the moulds (labyrinths) do wear out with repeated use and so they need to be replaced or supplemented. Another problem is maintaining the required accuracy of the spatial shape of the labyrinth in the repeated production of one shape of the labyrinth or in the production of more pieces of one labyrinth.

DE 20 2013 100888 U1 describes long mould for forming tubes, where the mould is created by non-disassembly joining of the shorter mould parts, which are assigned to each other in face to face manner (butt joint) or by overlapping of the individual parts. This is extremely demanding for the precision of mechanical manufacturing of the assembly parts, as well as for the accuracy of the positioning and assembly of the parts itself and also for the fixtures (tools) used for this. In DE 20 2013 100888 U1 is also not possible to easily adjust the relative rotation of the parts to be joined and also there is not possible to adjust the inclination of the parts to be joined.

The aim of the invention is to eliminate or at least minimize the drawbacks of the background art, especially to simplify the production of the moulds - shaping labyrinths, shorten production times, maintain reproducible accuracy and ensure that the individual shaping labyrinths produced are mutually identical.

### Principle of the invention

The goal of the invention is achieved by a mould for bending of plastic or rubber tubes in furnace or by steam, whose principle consists in that each of the parts of the shaping labyrinth is provided at the end intended for this connection with a connecting flange adapted for detachable connection with adjustment of mutual turning and mutual angle to the connecting flange of the adjacent part of the labyrinth.

The principle of the method of producing a mould for bending of plastic or rubber tubes in furnace or by steam consists in that after adjusting the shape of the labyrinth, the adjusted labyrinth is scanned by a 3D scanner and subsequently a digital 3D model of the individual parts of the labyrinth is created for a 3D printer, whereupon at least a part of the labyrinth is created on a 3D printer with at least one connecting flange with holes and/or at least one connecting eye or at least a part of the labyrinth is 3D printed separately without connecting flanges and/or without connecting eyes, which are connected to the printed part of the labyrinth additionally, and the individual parts of the labyrinth are joined together, the surface is polished and, optionally, the adjacent parts of the labyrinth are additionally joined also undetachably, in addition to being joined detachably.

The invention takes advantage of the fact that the use of connecting flanges of the adjacent parts of the labyrinth enables to adjust additionally the turning between the individual parts of the labyrinth and, by means of inserts inserted between the connecting flanges, it is also possible to adjust additionally the mutual angles under which the adjacent parts of the labyrinth are connected. Another advantage of the invention is creating a digital 3D model of the individual parts of the adjusted labyrinth, which is easy to use for a 3D printer printing from a suitable material so that the individual parts of the labyrinth can be repeatedly printed in the same quality, the same shape, etc.

### Description of drawings

The invention is schematically represented in drawings, wherein Fig. 1 shows an exemplary embodiment of a mould with a labyrinth comprising two parts connected by flanges, Fig. 2 shows a sector of the labyrinth comprising three parts connected by flanges, Fig. 3 represents an exemplary embodiment of a flange for connecting the parts of the labyrinth and Fig. 4 shows an exemplary embodiment of a labyrinth formed by two parts and connecting eyes for attaching it to the mould frame.

### Examples of embodiment

The invention will be described with reference to an embodiment of a mould for bending of plastic or rubber tubes in furnace or by steam. The mould is in the functional state mounted on a frame of a furnace/steam bending device of plastic or rubber tubes, namely on a stiffener **1**, which is mounted on the unillustrated frame of the device.

Struts **2** are fastened to the stiffeners **1.** A shaping labyrinth **3,** hereinfter only "labyrinth", is attached to the struts **2** by means of connecting eyes **20** arranged along the length of the labyrinth **3.** The labyrinth **3**, in a known manner, serves to give the desired spatial shape to the unillustrated the tube being shaped in the elastic state of its material, i.e. the labyrinth **3** substantially acts as a tube-forming template.

The labyrinth **3** is longitudinally divided into at least two parts I, II, which are provided at mutually adjacent ends with connecting flanges **6,** by which the two parts I, II are joined to each other by suitable means, preferably detachably by means of screw joints **7** (screws and nuts). Thus, if necessary, it is possible to produce and replace only worn or damaged parts I, II of the labyrinth **3** or to create very long labyrinths **3.** The connecting flanges **6** are disposed in the bends of the labyrinth **3** and/or in straight parts of the labyrinth **3** between the bends.

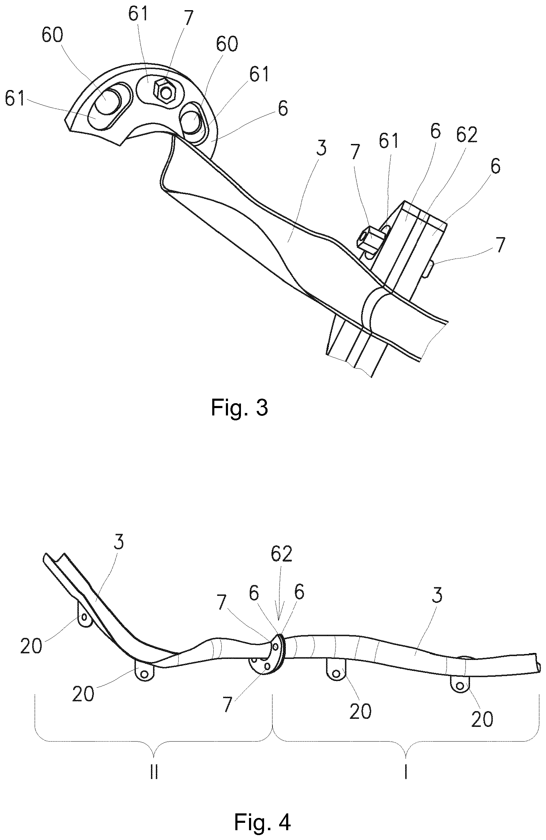

To be able to adjust the mutual position of the adjacent parts I and **II** of the labyrinth **3,** the connecting flanges **6** are provided with a system of connecting holes **60,** adapted therefor, e.g., with different mutual spacings, or connecting holes **60** elongated in the direction of the circumference of the flanges **6,** as shown in Fig. 3. The connecting holes **60** of the connecting flanges **6** are optionally provided with recesses **61** for the heads of the binder screws and/or for nuts.

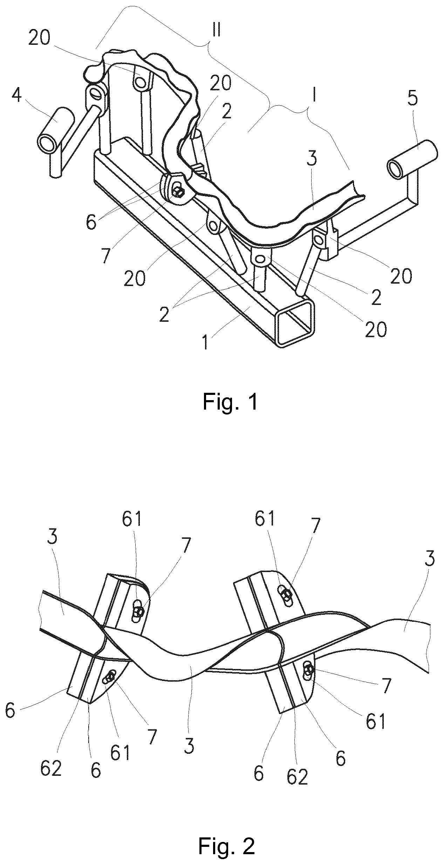

In the embodiment shown in Fig. 2, at least one modification insert **62** is inserted between the connecting flanges **6** of the adjacent parts **I**, **II** of the labyrinth. By its shape and profile the modification insert **62** makes it possible to additionally adjust the length, turning or angle between the individual adjacent parts **I, II** of the labyrinth **3.**

In the illustrated exemplary embodiment, the areas of connection of the individual adjacent parts **I**, **II** of the labyrinth **3** are after previous detachable connection of the adjacent connecting flanges **6**, e.g., also joined undetachably, they are welded to each other, so that the adjusted and precise joints cannot be disconnected or changed.

The labyrinth **3** as such is created by some of the known methods, e.g., by first preparing a drawing of the tube to be shaped as a product for which the respective labyrinth **3** is intended. According to the spatial shape of the tube to be shaped, a tube having a comparable internal diameter, such as the outer diameter of the tube to be shaped, is used to form the labyrinth **3.** The tube for forming the labyrinth 3 is spatially shaped on a sufficiently precise bending machine or on a hand bending machine, so that its spatial longitudinal shape of the inner cross-section corresponds to the spatial outer shape of the tube to be shaped. Subsequently, depending on whether it is steam moulding or moulding in a furnace, the ends of this semi-finished product are welded to the respective head of the future labyrinth, alternatively also to the nuts and holders **20.** Next, paths for cutting a longitudinal slot in the tube are drawn on the tube and part of the tube surface is cut out to form the labyrinth **3.** Then the labyrinth **3** is ground and polished. In the next step, the labyrinth **3** is attached to a strut **2** and a stiffener **1** and the shape of the labyrinth **3** is then adjusted according to the control master jig of the tube to be shaped. In this manner, one labyrinth **3** is formed.

The method of producing a mould according to the present invention consists in that, after adjusting the shape of the labyrinth **3** according to the control master jig of the tube to be shaped, the adjusted labyrinth **3** is scanned by a 3D scanner. Thus a digitized form of the adjusted labyrinth **3** is obtained, to which are afterwards added separating sites for dividing the labyrinth **3** into individual parts I, II, of the labyrinth **3,** optionally also with connecting flanges **6** with holes **60** and at least one connecting eye **20.** From such modified data, a digital 3D model of the individual parts **I**, **II** of the labyrinth **3** is subsequently created, which is usable for the 3D printer, and the individual parts **I**, **II** of the labyrinth **3** are then printed from a suitable material on a suitable 3D printer. According to a preferred embodiment, at least one part **I, II** is 3D printed, including at least one flange and/or at least one eye clamp **20.** According to another embodiment, at least one part **I, II** of the labyrinth **3** is 3D printed and is additionally provided with at least one connecting flange **6** of at least one eye clamp **20,** which are made in a separate production process, whether by using 3D printing technology or by conventional production methods, such as machining, cutting, etc. In another unillustrated example of embodiment, the labyrinth **3** with flanges **6** and connecting eyes **20** is formed by a combination of the preceding embodiments, e.g. some parts **I, II** of the labyrinth **3** are made using 3D printing technology, including the flanges **6** and connecting eye **20,** other parts **I**, **II** of the labyrinth **3** are created on a 3D printer and the flanges **6** and the connecting eyes **20** are attached thereto additionally, etc.

The individual parts **I**, **II** of the labyrinth **3** are subsequently joined together, the surface is polished, or the adjacent parts **I**, **II** of the labyrinth **3**, in addition to being connected detachably, are additionally joined together also undetachably, e.g., by welding, and the composite labyrinth **3** is attached to the frame of the strut **2** and the stiffener **1** and is ready for use. Optionally, at least one part **I, II** of the labyrinth **3** can be configured in this manner.

### Industrial applicability

The invention is applicable in series production of plastic or rubber shaped tubes.

## Claims

1. A mould for bending of plastic or rubber tubes in furnace or by steam, which comprises a shaping labyrinth (3) comprising at least two adjacent parts (I, II) connected to each other, **characterized in that** each part (I, II) is at its end which is intended for the connection to the other part (II, I) of the shaping labyrinth (3) provided with a connecting flange (6) adapted for detachable connection with adjustment of mutual turning and mutual angle to the connecting flange (6) of the adjacent part (I, II) of the labyrinth (3).

2. The mould according to claim 1, **characterized in that** at least one modifying insert (62) is located between the connecting flanges (6) of the adjacent parts (I, II) of the labyrinth (3).

3. The mould according to claim 1 or 2, **characterized in that** the connecting flanges (6) of adjacent parts (I, II) of the labyrinth (3) are additionally to the previous detachable connection joined together undetachably.

4. The mould according to any of claims 1 to 3, **characterized in that** at least one part (I, II) of the labyrinth (3) is formed by a 3D printout.

5. The mould according to claim 4, **characterized in that** at least one part (I, II) of the labyrinth (3) is formed by a 3D printout, including at least one flange (6) and/or at least one connecting eye (20).

6. The mould according to claim 4, **characterized in that** at least one part (I, II) of the labyrinth (3) is formed by a 3D printout, to which at least one flange and/or at least one connecting eye (20) is additionally connected.

7. A method of producing a mould according to any of claims 1 to 6 for bending of plastic or rubber tubes in furnace or by steam, in which a shaping labyrinth (3) is formed, whose shape is subsequently adjusted according to a control master jig of the tube to be shaped, **characterized in that** after adjusting the shape of the labyrinth (3) the adjusted labyrinth (3) is scanned by a 3D scanner and afterwards a digital 3D model of the individual parts (I, II) of the labyrinth (3) is created for a 3D printer, whereupon at least a part (I, II) of the labyrinth (3) is created on a 3D printer with at least one connecting flange (6) with holes (60) and/or at least one connecting eye (20) or at least a part (I, II) of the labyrinth (3) is 3D printed separately without connecting flanges (6) and/or without connecting eyes (20), which are connected to the printed part (I, II) of the labyrinth (3) additionally, and the individual parts (I, II) of the labyrinth (3) are detachably joined by the connecting flanges (6) together, their mutual turning and angle is adjusted, the surface of adjacent parts (I, II) is polished and, optionally, the adjacent parts (I, II) of the labyrinth (3), are additionally joined together also undetachably in addition to the detachable connection.

## Patentansprüche

1. Form zum Biegen von Kunststoff- oder Gummirohren in einem Ofen oder durch den Dampf, die ein Formlabyrinth (3) aufweist, das mindestens zwei benachbarte, aneinander angeschlossene Teile (I, II) aufweist, **dadurch gekennzeichnet, dass** jeder Teil (I, II) an seinem Ende, das zur Verbindung mit dem anderen Teil (II, I) des Formlabyrinths (3) bestimmt ist, mit einem Verbindungsflansch (6) ausgestattet ist, der zur lösbaren Verbindung mit dem Verbindungsflansch (6)des benachbarten Teils (I, II) des Formlabyrinths (3)mit einer Einstellung der gegenseitigen Drehung und des gegenseitigen Winkels von beiden zu verbindenden Flanschen (6) angepasst ist.

2. Form nach dem Anspruch 1, **dadurch gekennzeichnet, dass** zwischen den Verbindungsflanschen (6) der benachbarten Teile (I, II) des Formlabyrinths (3) mindestens eine Modifikationseinlage (62) platziert ist.

3. Form nach dem Anspruch 1 oder 2, **dadurch gekennzeichnet, dass** die Verbindungsflansche (6) der benachbarten Teile (I, II) des Formlabyrinths (3) zur lösbaren Verbindung nachträglich gegenseitig unlösbar verbunden sind.

4. Form nach einem der Ansprüche 1 bis 3, **dadurch gekennzeichnet, dass** mindestens ein Teil (I, II) des Formlabyrinths (3) durch 3D-Ausdruck gebildet wird.

5. Form nach dem Anspruch 4, **dadurch gekennzeichnet, dass** mindestens ein Teil (I, II) des Formlabyrinths (3) durch einen 3D-Ausdruck, einschließlich mindestens eines Flansches (6) und/oder mindestens einer Aufnahmeöse (20) gebildet wird.

6. Form nach dem Anspruch 4, **dadurch gekennzeichnet, dass** mindestens ein Teil (I, II) des Formlabyrinths (3) durch einen 3D-Ausdruck gebildet wird, an den mindestens ein Flansch und/oder mindestens eine Aufnahmeöse (20) nachträglich angeschlossen sind.

7. Verfahren zur Produktion der Form nach einem der Ansprüche 1 bis 6 zum Biegen von Kunststoff- oder Gummirohren im Ofen oder durch den Dampf, bei dem ein Formlabyrinth (3) gebildet wird, dessen Form anschließend laut einer Kontrollvorrichtung des zukünftigen zu formenden Rohres abgestimmt wird, **dadurch gekennzeichnet, dass** nach der Abstimmung der Form des Formlabyrinths (3) das abgestimmte Formlabyrinth (3) mit Hilfe eines3D-Scanners gescannt wird und anschließend ein digitales 3D-Modell einzelner Teile (I, II) des Formlabyrinths (3) für einen 3D-Drucker gebildet wird, wonach mindestens ein Teil (I, II) des Formlabyrinths (3) auf dem 3D-Drucker mit mindestens einem Verbindungsflansch (6) und Öffnungen (60) und/oder mindestens einer Aufnahmeöse (20) gebildet wird oder mindestens ein Teil (I, II) des Formlabyrinths (3) in3D separat ohne die Verbindungsflansche (6) und/oder ohne Aufnahmeösen(20) ausgedruckt wird, die an die ausgedruckten Teile (I, II) des Formlabyrinths (3) nachträglich angeschlossen werden, und einzelne Teile (I, II) des Formlabyrinths (3) durch die Verbindungsflansche (6) zusammen lösbar verbunden werden, ihre gegenseitige Drehung und Winkel eingestellt werden, die Formlabyrinth Oberfläche poliert wird und die benachbarten Teile (I, II) des Formlabyrinths (3) eventuell als ein Zusatz zur lösbaren Verbindung auch unlösbar nachträglich verbunden werden.

## Revendications

1. Moule pour cintrage de tubes en plastique ou en caoutchouc au four ou par vapeur qui contient un labyrinthe de moulage (3) comprenant au moins deux parties adjacentes (I, II) attachées l'une à l'autre, **caractérisé en ce que** chacune des parties (I, II) est sur son extrémité, destinée à la liaison avec l'autre partie (II, I) du labyrinthe de moulage (3), munie d'une bride de liaison (6) adaptée pour une liaison démontable avec ajustement de la rotation mutuelle et de l'angle mutuel à la bride de liaison (6) de la partie adjacente (I, II) du labyrinthe (3).

2. Moule selon la revendication 1, **caractérisé en ce qu'**au moins un insert de modification (62) se situe entre les brides de liaison (6) des parties adjacentes (I, II) du labyrinthe (3).

3. Moule selon la revendication 1 ou 2, **caractérisé en ce que** les brides de liaison (6) des parties adjacentes (I, II) du labyrinthe (3) sont, en plus de leur liaison démontable, liées de manière indémontable.

4. Moule selon l'une des revendications de 1 à 3, **caractérisé en ce qu'**au moins une partie (I, II) du labyrinthe (3) est formée par une impression 3D.

5. Moule selon la revendication 4, **caractérisé en ce qu'**au moins une partie (I, II) du labyrinthe (3) est formée par une impression 3D, y compris au moins une bride (6) et/ou au moins un oeillet de serrage (20).

6. Moule selon la revendication 4, **caractérisé en ce qu'**au moins une partie (I, II) du labyrinthe (3) est formée par une impression 3D, à laquelle est lié, en outre, au moins une bride et/ou au moins un oeillet de serrage (20).

7. Procédé de fabrication du moule selon l'une des revendications de 1 à 6 pour cintrage de tubes en plastique ou en caoutchouc au four ou par vapeur, lors duquel est formé un labyrinthe de moulage (3) dont la forme est ensuite réglée en fonction du gabarit de contrôle du futur tube moulé, **caractérisé en ce qu'**après le réglage de sa forme, le labyrinthe (3) est scanné avec un scanner 3D et ensuite un modèle numérique 3D de chaque partie (I, II) du labyrinthe (3) est créé pour une imprimante 3D, après quoi au moins une partie (I, II) du labyrinthe (3) est créée sur l'imprimante 3D avec au moins une bride de liaison (6) et des trous (60) et/ou au moins un oeillet de serrage (20), ou au moins une partie (I, II) du labyrinthe (3) en 3D est imprimée séparément sans les brides de liaison (6) et/ou sans oeillets de serrage (20) qui sont fixés aux parties imprimées (I, II) du labyrinthe (3) plus tard, et les parties séparées (I, II) du labyrinthe (3) sont liées de manière démontable par des brides de liaison (6), leur rotation et leur angle relatifs sont ajustés, la surface du labyrinthe est polie et, si nécessaire, les parties adjacentes (I, II) du labyrinthe (3) sont reliées de manière indémontable en complément de la liaison démontable.
